(19) **Europäisches Patentamt**
**European Patent Office**
**Office européen des brevets**

(11) **EP 1 958 806 B1**

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(51) Int Cl.:
***B60H 1/22*** *(2006.01)*

(21) Anmeldenummer: **08001945.8**

(22) Anmeldetag: **01.02.2008**

(54) **Verfahren zum Betreiben eines Fahrzeugheizgerätes**

Method for operating a vehicle heating device

Procédé destiné au fonctionnement d'un appareil de chauffage de véhicule

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.02.2007 DE 102007007122**

(43) Veröffentlichungstag der Anmeldung:
**20.08.2008 Patentblatt 2008/34**

(73) Patentinhaber: **J. Eberspächer GmbH & Co. KG 73730 Esslingen (DE)**

(72) Erfinder: **Schmidt, Oliver 73207 Plochingen (DE)**

(74) Vertreter: **Ruttensperger, Bernhard et al Weickmann & Weickmann Patentanwälte Postfach 86 08 20 81635 München (DE)**

(56) Entgegenhaltungen:
**DE-A1- 4 323 586      DE-A1- 4 445 191 DE-A1- 10 143 480**

EP 1 958 806 B1

**Beschreibung**

Die vorliegende Erfindung betrifft ein Verfahren zum Betreiben eines Fahrzeugheizgerätes, wie es beispielsweise als Standheizung und Zuheizer in einem Fahrzeug eingesetzt wird.

Die DE 4323586 A1 zeigt ein Verfahren gemäß Oberbegriff des Anspruchs 1.

Durch derartige, allgemein mit flüssigem Brennstoff betriebene Fahrzeugheizgeräte kann durch Übertragung der Verbrennungswärme auf die in einen Fahrzeuginnenraum einzuleitende Luft die gewünschte Temperatur in einem Fahrzeuginnenraum bereitgestellt werden. Im Allgemeinen werden dabei die Fahrzeugheizgeräte so betrieben, dass sie in verschiedenen diskret einstellbaren Heizleistungsstufen arbeiten, um je nach erforderlicher Wärmemenge das Heizgerät mit entsprechend angepasster Heizleistung zu betreiben. Der Einsatz nur einiger diskreter Heizleistungsstufen vereinfacht die Ansteuerung. Im Allgemeinen werden zum Vorgeben bestimmter Heizleistungsstufen eine Verbrennungsluftförderanordnung und eine Brennstoffförderanordnung in für die geforderte Heizleistungsstufe jeweils vorgegebener Weise betrieben, also beispielsweise ein Verbrennungsluftgebläse mit entsprechender Drehzahl betrieben bzw. eine Dosierpumpe mit entsprechender Pumpfrequenz betrieben. Ist die Temperatur in einem Fahrzeuginnenraum dann vergleichsweise nahe an der beispielsweise durch einen Fahrer vorgegebenen Soll-Temperatur, findet eine Temperaturregelung im Allgemeinen durch das alternierende Umschalten zwischen zwei Heizleistungsstufen statt, was allgemein als Zweipunktregelung bezeichnet wird. Diese Temperaturregelung ist vergleichsweise grob und involviert entsprechend den jeweils vorgesehenen bzw. möglichen Heizleistungsstufen ein alternierendes Hin- und Hervariieren in einem vergleichsweise großen Heizleistungsbereich. Da dies begleitet ist von einer Änderung der Betriebscharakteristik der Verbrennungsluftförderanordnung und der Brennstoffförderanordnung, können nicht nur ungewünscht große Temperaturschwankungen bei dieser Grobregelung auftreten, sondern diese Übergänge zwischen verschiedenen Betriebszuständen können auch im Fahrzeuginnenraum akustisch wahrgenommen werden.

Es ist die Aufgabe der vorliegenden Erfindung, ein Verfahren zum Betreiben eines Fahrzeugheizgerätes vorzusehen, mit welchem mit einfachen Maßnahmen eine verbesserte Betriebscharakteristik erzielt werden kann.

Erfindungsgemäß wird diese Aufgabe gelöst durch ein Verfahren zum Betreiben eines Fahrzeugheizgerätes, wobei das Fahrzeugheizgerät einen Brennerbereich sowie eine Verbrennungsluftförderanordnung zum Fördern von Verbrennungsluft zu dem Brennerbereich und eine Brennstoffförderanordnung zum Fördern von Brennstoff zu dem Brennerbereich aufweist, ferner umfassend eine Ansteuervorrichtung, durch welche die Verbrennungsluftförderanordnung und die Brennstoffförderanordnung ansteuerbar sind, um das Fahrzeugheizgerät in verschiedenen Heizleistungsstufen zu betreiben, wobei in Zuordnung zu jeder Heizleistungsstufe ein das Fördervermögen der Verbrennungsluftförderanordnung charakterisierender erster Betriebsparameter und ein das Fördervermögen der Brennstoffförderanordnung charakterisierender zweiter Betriebsparameter vorgesehen sind und die Ansteuervorrichtung zum Betreiben des Fahrzeugheizgerätes in einer bestimmten Heizleistungsstufe die Verbrennungsluftförderanordnung und die Brennstoffförderanordnung mit dem in Zuordnung zu dieser bestimmten Heizleistungsstufe vorgesehenen ersten Betriebsparameter und zweiten Betriebsparameter ansteuert, wobei das Verfahren die Maßnahmen umfasst:

a) Durchführen einer Grobregelphase der Heizleistung zum Einstellen einer Ist-Temperatur im Bereich einer Soll-Temperatur, wobei die Grobregelphase das alternierende Umschalten zwischen einer ersten Heizleistungsstufe geringerer Heizleistung und einer zweiten Heizleistungsstufe höherer Heizleistung umfasst,

b) während der Durchführung der Maßnahme a), Bestimmen eines mittleren ersten Betriebsparameters und eines mittleren zweiten Betriebsparameters, beruhend auf einem Betriebszeitanteil der ersten Heizleistungsstufe und einem Betriebszeitanteil der zweiten Heizleistungsstufe,

c) nach Beendigung der Grobregelphase, Starten einer Feinregelphase, wobei wenigstens am Beginn der Feinregelphase die Verbrennungsluftförderanordnung beruhend auf dem mittleren ersten Betriebsparameter angesteuert wird und die Brennstoffförderanordnung beruhend auf dem mittleren zweiten Betriebsparameter angesteuert wird.

Bei dem erfindungsgemäßen Verfahren wird also nur phasenweise eine Grobregelung durchgeführt, beispielsweise so lange, bis die Ist-Temperatur ausreichend nahe bzw. auch ausreichend lang bei der Soll-Temperatur ist. Danach kann in eine Feinregelphase übergegangen werden, in welcher beruhend auf zuvor in der Grobregelphase ermittelten Größen für die beiden Betriebsparameter dafür gesorgt werden kann, dass die Ist-Temperatur vergleichsweise nahe bei der Soll-Temperatur bleibt, ohne dass größere, ein Abweichen vermeidende Gegenregelmaßnahmen erforderlich wären.

Da es für die Ermittlung der mittleren Betriebsparameter erforderlich ist, ein definiertes Zeitfenster zu setzen, während welchem diese Ermittlung stattfindet, wird vorgeschlagen, dass der Beginn der Grobregelphase dann erkannt wird, wenn wenigstens ein Wechsel von einer Heizleistungsstufe von erster Heizleistungsstufe und zweiter Heizleistungsstufe in die jeweils andere Heizleistungsstufe und darauf folgend ein Wechsel von der anderen Heizleistungsstufe zurück in die eine Heizleistungsstufe aufgetreten ist.

Dazu kann beispielsweise vorgesehen sein, dass der Betriebszeitanteil der ersten Heizleistungsstufe beruhend auf der Zeit, während welcher in der Grobregelphase die Ansteueranordnung die Verbrennungsluftförderanordnung und die Brennstoffförderanordnung zum Bereitstellen der ersten Heizleistungsstufe ansteuert, bestimmt wird, und dass der Betriebszeitanteil der zweiten Heizleistungsstufe beruhend auf der Zeit, während welcher in der Grobregelphase die Ansteueranordnung die Verbrennungsluftförderanordnung und die Brennstoffförderanordnung zum Bereitstellen der zweiten Heizleistungsstufe ansteuert, bestimmt wird.

Um in einfacher Art und Weise einen Wert für den mittleren ersten Betriebsparameter festlegen zu können, wird vorgeschlagen, dass der mittlere erste Betriebsparameter beruhend auf der mit dem jeweiligen Betriebszeitanteil der ersten Heizleistungsstufe und der zweiten Heizleistungsstufe in der Grobregelphase gewichteten Summe des ersten Betriebsparameters für die erste Heizleistungsstufe und des ersten Betriebsparameters für die zweite Heizleistungsstufe bestimmt wird.

Beispielsweise kann der mittlere erste Betriebsparameter berechnet werden gemäß:

$$BP1_m = BP1_{HLS1} \times [Z_{HLS1}/(Z_{HLS1} + Z_{HLS2})] + BP1_{HLS2} \times [Z_{HLS2}/(Z_{HLS1} + Z_{HLS2})],$$

wobei:

$BP1_{HLS1}$ der erste Betriebsparameter für die erste Heizleistungsstufe ist,
$BP1_{HLS2}$ der erste Betriebsparameter für die zweite Heizleistungsstufe ist,
$Z_{HLS1}$ die Betriebszeit der ersten Heizleistungsstufe in der Grobregelphase ist,
$Z_{HLS2}$ die Betriebszeit der zweiten Heizleistungsstufe in der Grobregelphase ist.

In entsprechender Art und Weise kann vorgesehen sein, dass der mittlere zweite Betriebsparameter beruhend auf der mit dem jeweiligen Betriebszeitanteil der ersten Heizleistungsstufe und der zweiten Heizleistungsstufe in der Grobregelphase gewichteten Summe des zweiten Betriebsparameters für die erste Heizleistungsstufe und des zweiten Betriebsparameters für die zweite Heizleistungsstufe bestimmt wird.

Auch hier kann vorgesehen sein, dass der mittlere zweite Betriebsparameter berechnet wird gemäß:

$$BP2_m = BP2_{HLS1} \times [Z_{HLS1}/(Z_{HLS1} + Z_{HLS2})] + BP2_{HLS2} \times [Z_{HLS2}/(Z_{HLS1} + Z_{HLS2})],$$

wobei:

$BP2_{HLS1}$ der zweite Betriebsparameter für die erste Heizleistungsstufe ist,
$BP2_{HLS2}$ der zweite Betriebsparameter für die zweite Heizleistungsstufe ist,
$Z_{HLS1}$ die Betriebszeit der ersten Heizleistungsstufe in der Grobregelphase ist,
$Z_{HLS2}$ die Betriebszeit der zweiten Heizleistungsstufe in der Grobregelphase ist.

Um in der Grobregelphase ein definiertes Umschalten zwischen den verschiedenen Heizleistungsstufen erreichen zu können, wird vorgeschlagen, dass für die Grobregelphase in Zuordnung zu der Soll-Temperatur eine über der Soll-Temperatur liegende erste Grobregelschwelle und eine unter der Soll-Temperatur liegende zweite Grobregelschwelle bestimmt werden, wobei dann, wenn die Ist-Temperatur die erste Grobregelschwelle überschreitet, die Ansteuervorrichtung die Verbrennungsluftförderanordnung und die Brennstoffförderanordnung zum Bereitstellen der ersten Heizleistungsstufe ansteuert, und dann, wenn die Ist-Temperatur die zweite Grobregelschwelle unterschreitet, die Ansteuervorrichtung die Verbrennungsluftförderanordnung und die Brennstoffförderanordnung zum Bereitstellen der zweiten Heizleistungsstufe ansteuert. Dabei können zum Vereinfachen der Ansteuerung die erste Grobregelschwelle und die zweite Grobregelschwelle für die Grobregelphase unveränderbar vorgegeben werden.

Um auch in der Feinregelphase dafür sorgen zu können, dass in definierter Art und Weise Maßnahmen ergriffen werden können, welche ein Wegdriften der Ist-Temperatur von der Soll-Temperatur vermeiden, wird vorgeschlagen, dass für die Feinregelphase in Zuordnung zu der Soll-Temperatur eine über der Soll-Temperatur liegende erste Feinregelschwelle und eine unter der Soll-Temperatur liegende zweite Feinregelschwelle bestimmt werden.

Vorzugsweise ist vorgesehen, dass wenigstens am Beginn der Feinregelphase der Abstand der ersten Feinregelschwelle von der Soll-Temperatur kleiner ist als der Abstand der ersten Grobregelschwelle von der Soll-Temperatur oder/und dass wenigstens am Beginn der Feinregelphase der Abstand der zweiten Feinregelschwelle von der Soll-Temperatur kleiner ist als der Abstand der zweiten Grobregelschwelle von der Soll-Temperatur.

Am Beginn der Feinregelphase wird im Allgemeinen mit den vorangehend erläuterten mittleren Betriebsparametern gearbeitet. Da jedoch nicht ausgeschlossen werden kann, dass auch unter Verwendung dieser mittleren Betriebsparameter die Ist-Temperatur über eine längere Zeit hinweg sich von der Soll-Temperatur entfernt, wird vorgeschlagen, dass dann, wenn in der Feinregelphase die Ist-Temperatur die erste Feinregelschwelle überschreitet, der mittlere erste Betriebsparameter oder/und der mittlere zweite Betriebsparameter zur Bereitstellung eines angepassten Betriebsparametersatzes vermindert wird und dass die Ansteuervorrichtung die Verbrennungsluftförderanordnung und die Brennstoffförderanordnung auf der Grundlage des angepassten Betriebsparametersatzes ansteuert. Gleichzeitig kann vorgesehen sein, dass bei Überschreiten der ersten Feinregelschwelle und Bereitstellung eines angepassten Betriebsparametersatzes die erste Feinregelschwelle erhöht wird, um eine angepasste erste Feinregelschwelle bereitzustellen. Auf diese Art und Weise wird ein ständiges Verändern der Betriebsparameter dann, wenn eine zunächst vorgegebene Feinregelschwelle überschritten worden ist, vermieden.

Weiter wird vorgeschlagen, dass dann, wenn in der Feinregelphase die Ist-Temperatur die zweite Feinregelschwelle unterschreitet, der mittlere erste Betriebsparameter oder/und der mittlere zweite Betriebsparameter zur Bereitstellung eines angepassten Betriebsparametersatzes erhöht wird und dass die Ansteuervorrichtung die Verbrennungsluftförderanordnung und die Heizluftförderanordnung auf der Grundlage des angepassten Betriebsparametersatzes ansteuert. Auch hier kann vorgesehen sein, dass bei Unterschreiten der zweiten Freinregelschwelle und Bereitstellung eines angepassten Betriebsparametersatzes die zweite Feinregelschwelle vermindert wird, um eine angepasste zweite Feinregelschwelle bereitzustellen.

Da bei der erfindungsgemäßen Vorgehensweise davon auszugehen ist, dass grundsätzlich dafür gesorgt werden soll, dass die Ist-Temperatur im Bereich der Soll-Temperatur bleibt, also eine Regelung möglichst nahe an der Soll-Temperatur stattfinden soll, wird weiter vorgeschlagen, dass dann, wenn die erste Feinregelschwelle zum Bereitstellen einer angepassten ersten Feinregelschwelle erhöht worden ist und die Ist-Temperatur die zweite Feinregelschwelle unterschreitet, die erste Feinregelschwelle wieder vermindert wird, vorzugsweise auf den Anfangswert der ersten Feinregelschwelle am Beginn der Feinregelphase, oder/und, dass dann, wenn die zweite Feinregelschwelle zum Bereitstellen einer angepassten zweiten Feinregelschwelle verringert worden ist und die Ist-Temperatur die erste Feinregelschwelle überschreitet, die zweite Feinregelschwelle wieder erhöht wird, vorzugsweise auf den Anfangswert der zweiten Feinregelschwelle am Beginn der Feinregelphase.

Wie vorangehend angegeben, kann die Ist-Temperatur die Temperatur in einem zu erwärmenden Innenraum sein. Selbstverständlich können auch die Temperaturen anderer thermisch zu beeinflussender Größen, wie z. B. eines flüssigen Mediums, als Ist-Temperatur verwendet und mit einer zugeordneten Soll-Temperatur verglichen werden.

Der erste Betriebsparameter kann eine Drehzahl eines Förderrads der Verbrennungsluftförderanordnung wiedergeben. Daher kann der zweite Betriebsparameter eine Pumpfrequenz eines Pumporgans der Brennstoffförderanordnung wiedergeben.

Die vorliegende Erfindung wird nachfolgend mit Bezug auf die beiliegenden Zeichnungen detailliert erläutert. Es zeigt:

Fig. 1    eine prinzipielle Darstellung eines Fahrzeugheizgeräts;

Fig. 2    den zeitlichen Verlauf einer Ist-Temperatur während einer Grobregelphase;

Fig. 3    die im Zusammenhang mit dem Temperaturverlauf der Fig. 2 auftretenden Übergänge zwischen verschiedenen Heizleistungsstufen;

Fig. 4    die zum Erreichen der Übergänge der verschiedenen Heizleistungsstufen auftretenden Variationen eines das Fördervermögen der Verbrennungsluftförderanordnung wiedergebenden Betriebsparameters;

Fig. 5    ein der Fig. 2 entsprechendes Temperaturdiagramm während einer Feinregelphase;

Fig. 6    den Verlauf des in Fig. 4 gezeigten Betriebsparameters während der Feinregelphase.

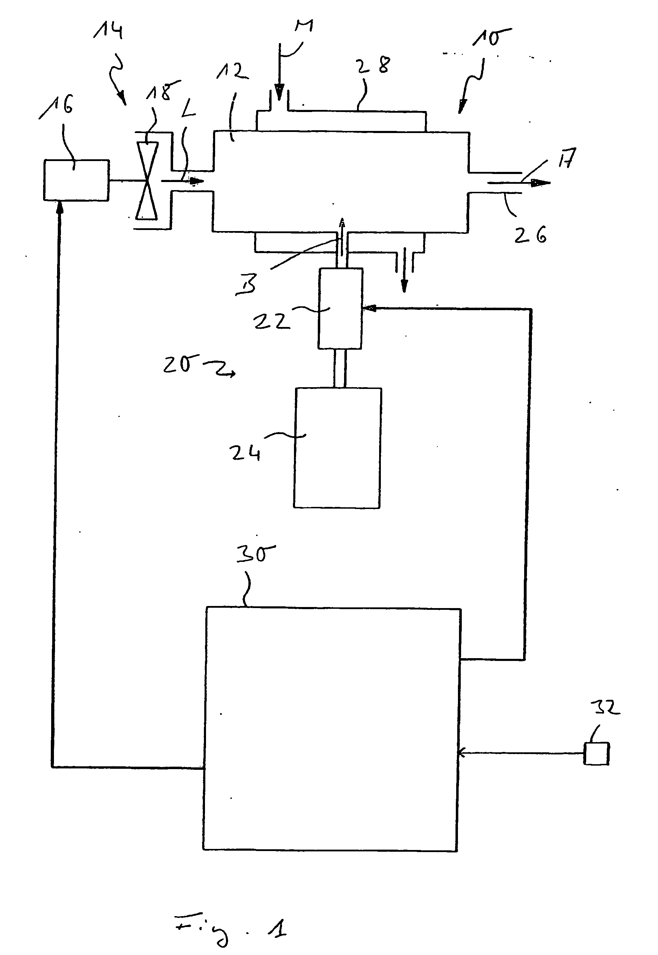

In Fig. 1 ist ein brennstoffbetriebenes Fahrzeugheizgerät allgemein mit 10 bezeichnet. Dieses Fahrzeugheizgerät 10 umfasst einen Brennerbereich 12, in welchem durch eine Verbrennungsluftförderanordnung 14 Verbrennungsluft L eingespeist wird. Die Verbrennungsluftförderanordnung 14 kann einen Antriebselektromotor 16 und durch diesen zur Drehung angetrieben ein Förderrad 18 aufweisen. Allgemein kann die Verbrennungsluftförderanordnung 14 beispielsweise nach Art eines Seitenkanalgebläses aufgebaut sein.

Eine Brennstoffförderanordnung 20 umfasst beispielsweise eine Dosierpumpe 22, die flüssigen Brennstoff aus einem Brennstoffreservoir 24 aufnimmt und in Richtung zu dem Brennerbereich 12 leitet. Im Brennerbereich 12 werden die Verbrennungsluft L und der Brennstoff B zum Erzeugen eines zündfähigen bzw. verbrennungsfähigen Gemisches gemischt und verbrannt. Die Verbrennungsabgase A treten an einem Abgasauslass 26 aus dem Brennerbereich 12 aus. In einem Wärmetauscherbereich 28 kann die bei der Verbrennung im Brennerbereich 12 entstehende Wärme auf ein zu erwärmendes Medium M übertragen werden. Dies kann beispielsweise die in einen Fahrzeuginnenraum einzuspeisende Luft sein.

Eine Ansteuervorrichtung 30 steuert unter Verwendung verschiedener Vorgaben die verschiedenen Systembereiche des Fahrzeugheizgeräts 10 an, um dieses in verschiedenen Heizleistungsstufen zu betreiben. So steuert die Ansteuervorrichtung 30 den Elektroantriebsmotor 16 an, ebenso wie die Dosierpumpe 22. Dabei kann in einem Speicherbereich der Ansteuervorrichtung 30 beispielsweise in Zuordnung zu jeder der einzustellenden Heizleistungsstufen ein Betriebsparametersatz abgelegt sein, welcher einen ersten Betriebsparameter BP1 enthält, der die Drehzahl des Förderrads 18 wiedergibt, und einen zweiten Betriebsparameter BP2 enthält, welcher die Förderfrequenz eines Pumporgans der Dosierpumpe 22 wiedergibt. Die Drehzahl des Förderrads 18 und die Förderfrequenz des Pumporgans sind so aufeinander abgestimmt, dass für eine jeweilige Heizleistungsstufe ein geeignetes Vermischungsverhältnis von Verbrennungsluft L und Brennstoff B in dem Brennerbereich 12 bereitgestellt wird. Dies bedeutet, eine Heizleistungsstufe mit höherer Heizleistung wird einen Betriebsparametersatz aufweisen, in welchem die beiden Betriebsparameter eine größere Drehzahl des Förderrads 18 bzw. eine größere Förderfrequenz des Pumporgans der Dosierpumpe 22 wiedergeben, als dies bei einem Betriebsparametersatz eine Heizleistungsstufe geringerer Heizleistung der Fall ist.

Es sei darauf hingewiesen, dass selbstverständlich die Ansteuervorrichtung 30 den Betrieb des Fahrzeugheizgeräts auf der Grundlage verschiedener weiterer Größen einstellen kann. So kann beispielsweise ein Temperatursensor 32 ein Temperatursignal liefern, das die Ist-Temperatur in dem zu überwachenden Raum wiedergibt. In der Ansteuervorrichtung 30 kann beispielsweise die durch einen Fahrer eingegebene Soll-Temperatur abgelegt sein, die mit der durch das Signal des Sensors 32 repräsentierten Ist-Temperatur verglichen wird. Je nach Abweichung zwischen diesen beiden Temperaturgrößen wird dann die Ansteuervorrichtung 30 das Fahrzeugheizgerät 10 so betreiben, dass dieses in einer geeigneten Heizleistungsstufe arbeitet. Liegt beispielsweise die Ist-Temperatur deutlich unter der Soll-Temperatur, so kann das Fahrzeugheizgerät 10 in der höchsten Heizleistungsstufe betrieben werden, um möglichst schnell die an sich nicht gewünschte große Abweichung zwischen der Ist-Temperatur und der Soll-Temperatur zu beseitigen. Nähert sich die Ist-Temperatur der Soll-Temperatur von unten an, so kann mit zunehmender Annäherung sukzessive die Heizleistung auf niedrigere Heizleistungsstufen heruntergestellt werden, was jeweils die Ansteuerung auf der Grundlage eines für diese jeweiligen Heizleistungsstufen vorgegebenen Betriebsparametersatzes mit sich bringt.

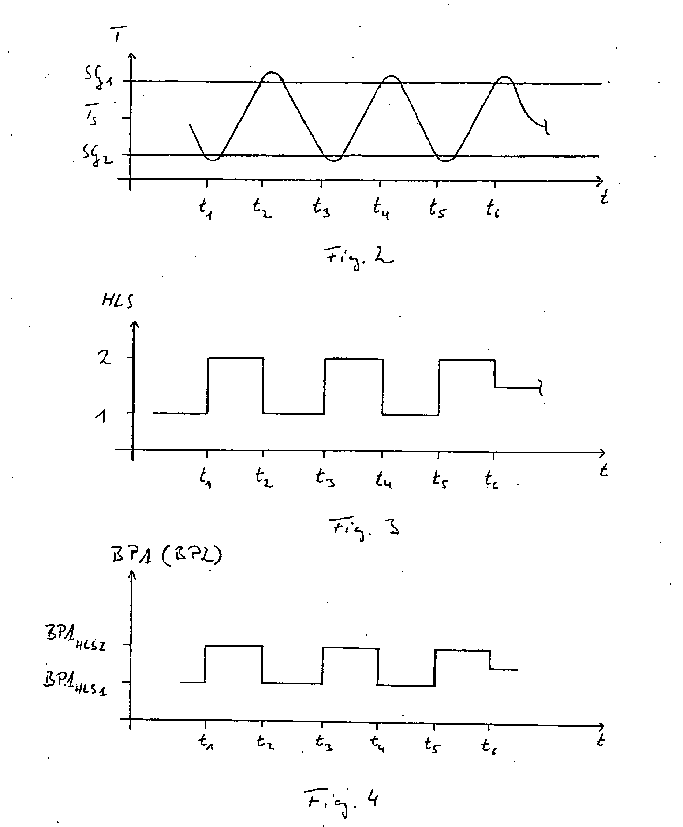

Liegt die Temperatur beispielsweise in einem Fahrzeuginnenraum bereits vergleichsweise nahe an einer vorgegebenen Soll-Temperatur, ist also beispielsweise der Fahrzeuginnenraum ausgehend von einer vergleichsweise niedrigen Umgebungstemperatur allmählich erwärmt werden, so kann in eine Grobregelphase übergegangen werden, in welcher, wie nachfolgend mit Bezug auf die Fig. 2 bis 4 dargelegt, alternierend zwischen zwei Heizleistungsstufen umgeschaltet wird.

Hierzu sei zunächst weiter angenommen, dass das Fahrzeug bereits ausreichend warm war und die Ansteuervorrichtung 30 das Fahrzeugheizgerät 10 so ansteuert, dass dieses in einer Heizleistungsstufe HLS1 arbeitet, wobei die Heizleistungsstufe HLS1 hier die niedrigere von zwei in Betracht gezogenen Heizleistungsstufen wiedergibt. Da also das Fahrzeugheizgerät 10 zum Bereitstellen einer vergleichsweise niedrigen Heizleistung betrieben wird, wird, wie dies in Fig. 2 erkennbar ist, die Temperatur etwas absinken und unter die Soll-Temperatur $T_S$ fallen. Unterschreitet dann zu einem Zeitpunkt $t_1$ die Ist-Temperatur T eine untere Grobregelschwelle $SG_2$, so wird erkannt, dass die Abweichung von der Solltemperatur $T_S$ zu groß wird. Dies erfordert das Hochschalten des Fahrzeugheizgeräts 10 auf die höhere Heizleistungsstufe HLS2 der beiden betrachteten Heizleistungsstufen. Man erkennt in Fig. 3, dass dieses Hochschalten zum Zeitpunkt $t_1$ erfolgt. Wie bereits vorangehend dargelegt, wird zum Erhöhen der Heizleistung die Ansteuervorrichtung 30 das Fahrzeugheizgerät 10 mit entsprechend für die Heizleistungsstufe HLS2 vorgesehenen Betriebsparametern BP1, BP2 ansteuern. Der Verlauf eines Betriebsparameters BP1 ist in Fig. 4 gezeigt. Dieser Betriebsparameter BP1 gibt beispielsweise die Drehzahl des Förderrads 18 wieder. In Zuordnung zur Heizleistungsstufe HLSs1 ist also der Betriebsparameter BP1 als Wert $BP1_{HLS1}$ vorgesehen. Beim Übergang zur höheren Heizleistungsstufe HLS2 wird dann zum Zeitpunkt $T_1$ der Betriebsparameter BP1 auf den Wert $BP1_{HLS2}$ gesetzt, also eine höhere Drehzahl des Förderrads 18 vorgegeben. Es sei hier darauf hingewiesen, dass selbstverständlich auch die Einstellung der gewünschten Drehzahl bzw. Förderfrequenz in regelungstechnischer Hinsicht erfolgen kann. Grundsätzlich kann dies aber auch allein durch Steuerungsmaßnahmen, nämlich entsprechende Ansteuersignale für den Elektroantriebsmotor 16 bzw. die Dosierpumpe 22 erfolgen. Es sei weiter darauf hingewiesen, dass in qualitativer Hinsicht der zweite Betriebsparameter BP2 in der Grobregelphase den gleichen Verlauf aufweisen kann, wie er in Fig. 4 für den ersten Betriebsparameter gezeigt ist.

Zum Zeitpunkt $t_2$ übersteigt dann die Temperatur T aufgrund der verstärkten Erwärmung eine obere Grobregelschwelle $SG_1$, was dazu führt, dass wieder auf die Heizleistungstufe HLS1 zurückgeschaltet wird, und zwar dadurch, dass für den ersten Betriebsparameter BP1 wieder der Wert $BP1_{HLS1}$ gewählt bzw. gesetzt wird.

Zu den beiden Grobregelschwellen $SG_1$ und $SG_2$ sei angenommen, dass diese im Verhältnis zur Solltemperatur $T_S$ festgesetzt sind, also einen über die Zeit gleichbleibenden Abstand zur Soll-Temperatur $T_S$ aufweisen, so dass auch dann, wenn die Ist-Temperatur bereits sehr nahe an der Soll-Temperatur $T_S$ ist, durch möglicherweise zu nahe an der Soll-Temperatur $T_S$ liegende Grobregelschwellen $SG_1$, $SG_2$ generierte zu häufige Umschaltvorgänge zwischen den verschiedenen Heizleistungsstufen vermieden werden können. Grundsätzlich ist es jedoch auch möglich, über die Zeitdauer der Grobregelphase hinweg eine allmähliche Annäherung der Grobregelschwellen $SG_1$. $SG_2$ an die Soll-Temperatur $T_S$ zuzulassen.

Zu der in Fig. 2 bis 4 dargestellten Situation sei weiter angenommen, dass die Zeitpunkte $t_1$ und $t_2$ diejenigen Zeitpunkte repräsentieren, zu welchen im Laufe der Temperierung eines Innenraums zum ersten Mal ein alternierendes Hin- und Herschalten der Heizleistung aufgetreten ist. Die Tatsache, dass die Heizleistung einmal in der einen Richtung verändert worden ist und darauf folgend dann in der anderen Richtung zurückverändert worden ist, kann als Indikator dafür verwendet werden, dass die Grobregelphase begonnen hat. Zuvor ist beispielsweise ein nacheinander auftretendes Durchschalten verschiedener Heizleistungsstufen erfolgt, um die Temperatur im Innenraum zunächst in Richtung zur Soll-Temperatur $T_S$ zu bringen. Es ist selbstverständlich, dass der Beginn der Grobregelphase auch erst dann bestimmt werden kann, wenn ein derartiges Umschalten mit größerer Häufigkeit aufgetreten ist, also wenn mindestens eine der beiden betrachteten Heizleistungsstufen zweimal aufeinander angewählt wurde. Dies wäre im dargestellten Beispiel also der Zeitpunkt $t_3$.

Wurde in der Ansteuervorrichtung 30 dann beispielsweise in der vorangehend beschriebenen Art und Weise erkannt, dass die Grobregelphase begonnen hat, beispielsweise zum Zeitpunkt $t_2$, so findet darauf folgend das in den Fig. 2 bis 4 dargestellte alternierende Umschalten statt, so dass die Temperatur T mit mehr oder weniger großer Abweichung um die Soll-Temperatur $T_S$ schwanken wird. Diese Schwankung hängt selbstverständlich auch ab von sich ändernden Umgebungsbedingungen.

Während der Grobregelphase wird erfindungsgemäß nunmehr beobachtet, wie lange das Fahrzeugheizgerät 10 in jeder der Heizleistungsstufen betrieben wird. Hierzu kann beispielsweise die Zeit bestimmt werden, während welcher im Diagramm der Fig. 4 die Heizleistungsstufe HLS2 gewählt war. Ebenso kann selbstverständlich dann die Zeit bestimmt werden, während welcher das Fahrzeugheizgerät 10 mit der Heizleistungsstufe HLS1 betrieben wurde. Es können somit also Betriebszeitanteile für die beiden Heizleistungsstufen HLS1 und HLS2 definiert werden, wobei der Betriebszeitanteil für die Heizleistungsstufe 1 berechnet werden kann als:

$$Z_{HLS1}/(Z_{HLS1} + Z_{HLS2}).$$

Dabei geben die Zeitdauern $Z_{HLS1}$ und $Z_{HLS2}$ jeweils die Zeiten an, während welchen das Fahrzeugheizgerät 10 in der Grobregelphase in den jeweiligen Heizleistungsstufen betrieben wird. Die Summe dieser beiden Zeitdauern repräsentiert die seit dem Beginn der Grobregelphase verstrichene Gesamtzeit. In entsprechender Weise kann selbstverständlich auch für die Heizleistungsstufe HLS2 der Betriebszeitanteil berechnet werden als:

$$Z_{HLS2} / (Z_{HLS1} + Z_{HLS2}).$$

Beruhend auf diesen Betriebszeitanteilen kann eine mittlere erforderliche Heizleistung bestimmt werden, die etwas größer sein wird als die in der Heizleistungsstufe HLS1 bereitgestellte Heizleistung und etwas kleiner sein wird als die in der Heizleistungsstufe HLS2 bereitgestellte Heizleistung. Allgemein kann diese mittlere erforderliche Heizleistung berechnet werden als:

$$P_m = P_{HLS1} \times [Z_{HLS1}/(Z_{HLS1} + Z_{HLS2})] + P_{HLS2} \times [Z_{HLS2}/(Z_{HLS1} + Z_{HLS2})].$$

Dabei repräsentiert $P_{HLS1}$ die in der Heizleistungsstufe HLS1 bereitgestellte Heizleistung, während $P_{HLS2}$ die in der Heizleistungsstufe HLS2 bereitgestellte Heizleistung repräsentiert.

Entsprechend dieser mittleren erforderlichen Heizleistung für die Grobregelphase können auch mittlere Betriebsparameter bestimmt werden, deren Verwendung dann zum Betreiben des Fahrzeugheizgeräts 10 mit der vorangehend berechneten mittleren erforderlichen Heizleistung führen wird. So kann der die Fördereffizienz, also beispielsweise auch die Drehzahl des Förderrads 18 wiedergebende mittlere erste Betriebsparameter berechnet werden als:

$$BP1_m = BP1_{HLS1} \times [Z_{HLS1}/(Z_{HLS1} + Z_{HLS2})] + BP1_{HLS2} \times [Z_{HLS2}/(Z_{HLS1} + Z_{HLS2})].$$

Dabei geben $BP1_{HLS1}$ und $BP1_{HLS2}$ die in der Fig. 4 auch repräsentierten Werte des ersten Betriebsparameters BP1 für die verschiedenen Heizleistungsphasen HLS1 und HLS2 wieder.

In entsprechender Weise kann ein zweiter mittlerer Betriebsparameter $BP2_m$ berechnet werden als:

$$BP2_m = BP2_{HLS1} \times [Z_{HLS1}/(Z_{HLS1} + Z_{HLS2})] + BP2_{HLS2} \times [Z_{HLS2}/(Z_{HLS1} + Z_{HLS2})].$$

Auch hier geben $BP2_{HLS1}$ und $BP2_{HLS2}$ jeweils die Werte des zweiten Betriebsparameters für die beiden Heizleistungsstufen HLS1 bzw. HLS2 wieder.

In der vorangehend beschriebenen Art und Weise kann also im Verlaufe der Grobregelphase durch das alternierende Umschalten zwischen den beiden Heizleistungsstufen HLS1 und HLS2 ein Betriebsparametersatz aus mittleren Betriebsparametern $BP1_m$ und $BP2_m$ ermittelt werden, wobei diese mittleren Betriebsparameter jeweils auf der Grundlage der entsprechend den Betriebszeitanteilen gewichteten Betriebsparameter für die beiden Heizleistungsstufen gebildet werden. Um diese mittleren Betriebsparameter entsprechend dem tatsächlich vorhandenen Betrieb ausreichend genau ermitteln zu können, kann es vorteilhaft sein, diese Beobachtung der Betriebszeitanteile bzw. der jeweiligen Zeiten, in welchen das Fahrzeugheizgerät 10 in den beiden Heizleistungsstufen HLS1 und HLS2 betrieben wird, über einen Zeitraum hinweg fortzuführen, der eine Mehrzahl von alternierenden Umschaltvorgängen umfasst. Während also beispielsweise der Beginn der Grobregelphase und somit auch der Beginn der Beobachtung der Betriebszeitanteile nach einem Hin- und Herschalten zwischen den Heizleistungsstufen HLS1 und HLS2 erkannt werden kann, kann beispielsweise vorgegeben sein, dass für eine ausreichend genaue Beobachtung der Betriebszeitanteile und eine entsprechend genaue Bestimmung der mittleren Betriebsparameter $BP1_m$ und $BP2_m$ zumindest zehn derartige alternierende Umschaltvorgänge zu berücksichtigen sind. Mit einer derartig fest vorgegebenen Anzahl an Umschaltvorgängen, über welche hinweg seit dem Beginn der Grobregelphase die Betriebszeitanteile ermittelt werden und die somit auch zur Ermittlung der mittleren Betriebsparameter beitragen, kann dann das Ende der Grobregelphase und somit der Eintritt in eine nachfolgend beschriebene Feinregelphase definiert werden. Alternativ ist es selbstverständlich möglich, dann festzulegen, dass die Grobregelphase beendet ist, wenn für die beiden mittleren Betriebsparameter eine bestimmte Konvergenz auf jeweilige Konvergenzwerte festgestellt wird.

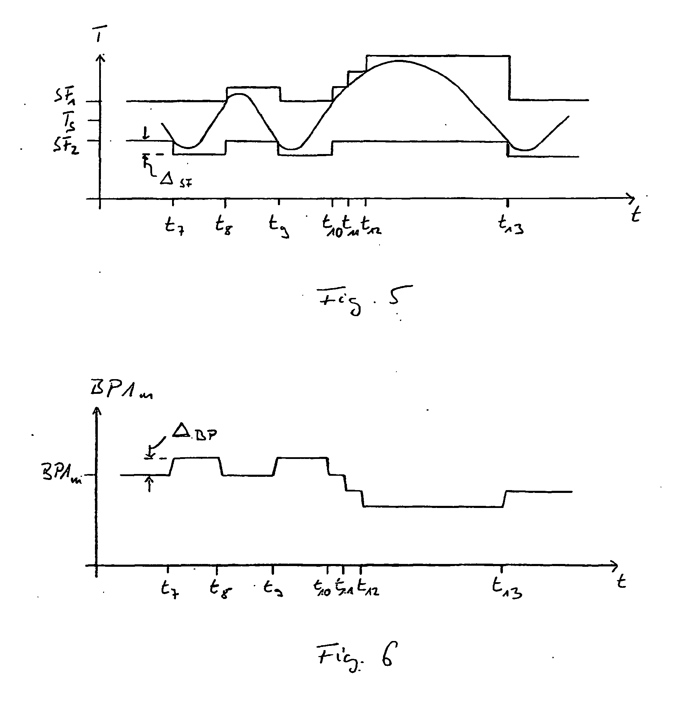

Ist beispielsweise in der vorangehend beschriebenen Art und Weise festgestellt worden, dass die Grobregelphase beendet ist, was bedeutet, dass entsprechend auch die mittleren Betriebsparameter $BP1_m$ und $BP2_m$ vorliegen, wird dann in eine in den Fig. 5 und 6 skizzierte Feinregelphase übergegangen. Dies kann beispielsweise zwischen den zwei Punkten $t_6$ und $t_7$ der Fall sein. Am Beginn der Feinregelphase steuert die Ansteuervorrichtung 30 die Verbrennungsluftförderanordnung 14 und die Brennstoffförderanordnung 20 dann beruhend auf einem Betriebsparametersatz an, der den mittleren ersten Betriebsparameter $BP1_m$ und den mittleren zweiten Betriebsparameter $BP2_m$ umfasst. Letztendlich bedeutet dies beispielsweise mit Hinblick auf das Förderrad 18, dass dieses am Beginn der Feinregelphase mit einer Drehzahl betrieben wird, die zwischen der Drehzahl, wie sie für die erste Heizleistungsstufe HLS1 vorgesehen ist, und der Drehzahl, wie sie für die zweite Heizleistungsstufe HLS2 vorgesehen ist, liegen wird. Grundsätzlich wird auch in der Feinregelphase versucht, die Ist-Temperatur T möglichst nahe an der Soll-Temperatur $T_S$ zu halten, wobei grundsätzlich zu unterstellen ist, dass beim Übergang von der Grobregelphase in die Feinregelphase diese Soll-Temperatur $T_S$ nicht notwendigerweise geändert wurde.

Auch für die Feinregelphase werden über bzw. unter der Soll-Temperatur $T_S$ liegende Temperaturschwellen, nämlich die Feinregelschwellen $SF_1$ bzw. $SF_2$, definiert. Deren Abweichung von der Soll-Temperatur $T_S$ wird allgemein kleiner sein, als dies bei den Grobregelschwellen $SG_1$ bzw. $SG_2$ der Fall ist.

Am Beginn der Feinregelphase wird im Allgemeinen die Temperatur zwischen den beiden Feinregelschwellen $SF_1$ und $SF_2$ liegen, was beispielsweise auch dadurch erreicht werden kann, dass zusätzlich zu dem vorangehenden Kriterium der ausreichend häufigen Umschaltung zwischen den beiden Heizleistungsstufen HLS1 und HLS2 bzw. der ausreichenden Konvergenz der mittleren Betriebsparameter noch das Kriterium hinzutreten kann, dass der Beginn der Feinregelstufe und mithin das Ende der Grobregelstufe dann definiert wird, wenn die Ist-Temperatur T bei der Soll-Temperatur $T_S$ liegt bzw. nur eine geringe Abweichung zu dieser aufweisen wird. Da im Allgemeinen davon auszugehen ist, dass die Ist-Temperatur gewissen Schwankungen unterworfen ist, wird auch in diesem Zustand dann die Ist-Temperatur T sich tatsächlich wieder von der Soll-Temperatur $T_S$ weg bewegen, beispielsweise unter diese fallen, wie dies in Fig. 5 veranschaulicht ist. Zu einem Zeitpunkt $t_7$ unterschreitet die Ist-Temperatur dann die untere Feinregelschwelle $SF_2$. Dies bedeutet, dass tatsächlich die Temperatur nunmehr zu stark nach unten von der Soll-Temperatur $T_S$ abweicht und mithin ein stärkeres Heizen erforderlich ist. Dies führt erfindungsgemäß dazu, dass die Heizleistung des Fahrzeugheizgeräts 10 wieder angehoben wird, und zwar dadurch, dass zumindest einer der beiden mittleren Betriebsparameter, vorzugsweise beide mittlere Betriebsparameter, entsprechend angepasst bzw. erhöht werden, um einen für die weitere Ansteuerung des Fahrzeugheizgeräts 10 einzusetzenden angepassten Betriebsparametersatz bereitzustellen. Dies ist in der Fig. 6 mit Bezug auf den Betriebsparameter BP1 veranschaulicht. Dieser weist am Beginn der Feinregelphase, also vor dem Zeitpunkt $t_7$, den Wert des mittleren ersten Betriebsparameters $BP1_m$ auf. Wird es zum Zeitpunkt $t_7$ dann erforderlich, stärker zu heizen, also die Heizleistung zu erhöhen, wird der mittlere erste Betriebsparameter um ein Ausmaß $\Delta_{BP}$ erhöht. Um hier einen kontinuierlicheren Übergang zwischen den verschiedenen Betriebsparametern bzw. Betriebszuständen zu erreichen, kann dieser Übergang, wie durch die Rampe in Fig. 6 veranschaulicht, allmählich vorgegeben werden. Zum Zeitpunkt $t_7$ wird die untere Feinregelschwelle $SF_2$ entsprechend auch um einen Betrag $\Delta_{SF}$ gesenkt, so dass ab dem Zeitpunkt $t_7$ zwar weiterhin mit der noch vom Beginn der Feinregelphase stammenden oberen Feinregelschwelle $SF_1$ gearbeitet wird, jedoch einem angepassten mittleren ersten Betriebsparameter $BP1_m$ und einer entsprechend angepassten unteren Feinregelschwelle $SF_2$ gearbeitet wird. Wie vorangehend bereits erwähnt, kann bzw. wird im Allgemeinen auch der mittlere zweite Betriebsparameter entsprechend angepasst werden, um vor allem wieder eine Verbrennung bei dem gewünschten Gemischverhältnis sicherstellen zu können.

Durch die Erhöhung der Heizleistung wird die Temperatur wieder ansteigen und nach Überschreiten der Soll-Temperatur $T_S$ zu einem Zeitpunkt $t_8$ dann die obere Feinregelschwelle $SF_1$ erreichen bzw. überschreiten. Dies bedeutet, dass zu stark geheizt wird und somit es erforderlich wird, die Heizleistung wieder zu senken. Zum Zeitpunkt $t_8$ wird dann, beispielsweise wieder in rampenartiger Weise, der mittlere erste Betriebsparameter $BP1_m$ erneut angepasst, und zwar indem er gesenkt wird. Für die hier vorzunehmende Anpassungsmaßnahme kann beispielsweise ein definiertes Ausmaß, also ein definierter Wert $\Delta_{BP}$ vorgegeben sein, der beispielsweise 5% des am Beginn der Feinregelphase vorhandenen mittleren ersten Betriebsparameters $BP1_m$ betragen kann. Dies bedeutet, nach dem erneuten Anpassen des mittleren ersten Betriebsparameters $BP1_m$ nach dem Zeitpunkt $t_8$ wird dieser wieder den gleichen Wert aufweisen, wie am Beginn der Feinregelphase.

Gleichzeitig mit dem Erreichen bzw. Überschreiten der oberen Feinregelschwelle $SF_1$ wird diese erhöht, beispielsweise um das gleiche Ausmaß $\Delta_{SF}$, in welchem zuvor die untere Feinregelschwelle $SF_2$ vermindert wurde. Diese Variation der Feinregelschwellen $SF_1$ bzw. $SF_2$ sollte in einem derartigen Ausmaß erfolgen, dass unter der normalerweise eintretenden Annahme, dass die Temperatur sich dann wieder in die andere Richtung bewegen wird, die jeweils angepasste Feinregelschwelle nicht sofort erneut überschritten wird.

Mit dem Erhöhen der oberen Feinregelschwelle $SF_1$ zum Zeitpunkt $t_8$ wird gleichzeitig auch die untere Schein-regelschwelle $SF_2$ wieder erhöht, also auf ihren Ausgangswert zurückgesetzt, um dafür zu sorgen, dass auch weiterhin eine Temperaturregelung möglichst nahe an der Soll-Temperatur $T_S$ stattfinden wird.

Zum Zeitpunkt $t_9$ wird dann erneut die wieder auf ihren Anfangswert eingestellte untere Feinregelschwelle $SF_2$ unterschritten, so dass, ähnlich wie bereits zum Zeitpunkt $t_7$, eine erneute Anpassung des mittleren ersten Betriebsparameters $BP1_m$ stattfinden wird. Entsprechend wird auch die untere Heizregelschwelle $SF_2$ wieder um den beispielsweise fest vorgegebenen Betrag $\Delta_{SF}$ gesenkt. Auch die obere Feinregelschwelle $SF_1$ wird wieder gesenkt, so dass sie nach dem Zeitpunkt $t_9$ wieder auf den am Beginn der Feinregelphase vorgegebenen Ausgangswert zurückgesetzt ist.

Durch die nach dem Zeitpunkt $t_9$ bereitgestellte größere Heizleistung wird dafür gesorgt, dass die Ist-Temperatur wieder ansteigt und die Soll-Temperatur $T_S$ überschreitet. Infolge dessen kann der Fall eintreten, dass zum Zeitpunkt $t_{10}$ auch die obere und auf ihren Anfangswert gesetzte Feinregelschwelle $SF_1$ wieder überschritten wird. Wie vorangehend bereits dargelegt, hat dies zur Folge, dass diese wieder um den Betrag $\Delta_{SF}$ angehoben wird, begleitet mit dem Anheben der unteren Feinregelschwelle $SF_2$ um den gleichen Betrag. Auch wird dann zum Zeitpunkt $t_{10}$ der mittlere erste Betriebsparameter $BP1_m$ wieder gesenkt, so dass er nach dieser Anpassungsmaßnahme wieder auf den am Anfang der Feinregelphase vorhandenen Ausgangswert zurückgesetzt ist.

Beispielsweise beeinflusst durch Änderungen in den Umgebungsbedingungen kann nun der Fall auftreten, dass trotz der nach dem Zeitpunkt $t_{10}$ aufgetretenen Verminderung der Heizleistung eine gewünschte Reaktion in der Ist-Temperatur nicht auftritt. Es kann also der Fall eintreten, dass zu einem Zeitpunkt $t_{11}$ auch die erhöhte bzw. angepasste obere Feinregelschwelle $SF_1$ überschritten wird. Erfindungsgemäß führt dies dazu, dass die Heizleistung erneut gesenkt wird, nämlich durch Bereitstellen eines entsprechend angepassten Betriebsparametersatzes, wie durch die nach dem Zeitpunkt $t_{11}$ auftretend erneute Absenkung des mittleren ersten Betriebsparameters $BP1_m$ in Fig. 6 veranschaulicht. Nach dem Zeitpunk $t_{11}$ wird also der mittlere erste Betriebsparameter $BP1_m$ zum ersten Mal einen Wert aufweisen, der unter dem am Beginn der Feinregelphase vorgesehenen Anfangswert liegt. Auch hier kann vorgesehen sein, dass das Ausmaß dieser Verringerung demjenigen entspricht, in welchem zuvor dieser mittlere erste Betriebsparameter $BP1_m$ nach oben hin verändert wurde.

Wie der Fig. 5 zu entnehmen ist, reicht auch diese nach dem Zeitpunkt $t_{11}$ auftretende Verringerung der Heizleistung nicht aus, um eine entsprechende Reaktion im Verlauf der Ist-Temperatur zu erzielen. Infolge dessen wird zu einem Zeitpunkt $t_{12}$ erneut die bereits zweifach angepasste bzw. erhöhte obere Heizregelschwelle $SF_1$ überschritten. Diese wird dann erneut beispielsweise um den Betrag $\Delta_{SF}$ erhöht bzw. angepasst. Eine weitere Anpassung der unteren Heizregelschwelle $SF_2$ findet jedoch nach dem Zeitpunkt $t_{10}$, zu dem sie bereits wieder auf ihren Anfangswert zurückgesetzt worden ist, nicht statt. Dies bedeutet, dass die beiden Feinregelschwellen sich bei der über die Zeit hinweg auftretenden Anpassung zwar von der Soll-Temperatur $T_S$ entfernen können, jedoch nicht näher an die Soll-Temperatur $T_S$ heran gebracht werden, als dies am Beginn der Feinregelphase der Fall ist.

Zum Zeitpunkt $t_{12}$ wird dann erneut auch die Heizleistung vermindert, also ein entsprechend angepasster Betriebsparametersatz bereitgestellt. Man erkennt beispielsweise, dass der mittlere erste Betriebsparameter $BP1_m$ erneut abgesenkt wird, beispielsweise wieder um den Betrag $\Delta_{BP}$.

Diese erneute Verringerung der Heizleistung führt nunmehr zu der gewünschten Reaktion bei der Ist-Temperatur. Diese überschreitet die bereits dreifach angepasste bzw. erhöhte obere Feinregelschwelle $SF_1$ nicht mehr, sinkt wieder ab und fällt allmählich wieder unter die Soll-Temperatur $T_S$. Zu einem Zeitpunkt $t_{13}$ wird dann die auf ihren Anfangswert gehaltene untere Heizregelschwelle $SF_2$ unterschritten. Dies führt dazu, dass zum einen diese untere Heizregelschwelle $SF_2$ wieder um den Betrag $\Delta_{SF}$ gesenkt wird. Gleichzeitig wird auch der Betriebsparametersatz wieder angepasst, um dem höheren Heizleistungsbedarf Rechnung zu tragen. Dies bedeutet, dass beispielsweise der mittlere erste Betriebsparameter $BP1_m$ wieder um eine Stufe erhöht wird, also beispielsweise den Betrag $\Delta_{BP}$, so dass er wieder etwas näher an den am Beginn der Feinregelphase vorhandenen Ausgangswert herangebracht wird. Zu diesem Zeitpunkt $t_{13}$ wird auch die obere Feinregelschwelle $SF_1$, die zuvor dreimal infolge erhöht worden ist, wieder zurückgesetzt, und zwar wieder auf ihren am Beginn der Feinregelphase vorhandenen Anfangswert, so dass auch nach dem Zeitpunkt $t_{13}$ eine Regelung sehr nahe am Wert der Soll-Temperatur $T_S$ erfolgen wird.

In der vorangehend beschriebenen Art und Weise kann in einer auf die Grobregelphase folgenden Feinregelphase, ausgehend von einem Betriebsparametersatz, welcher der in der Grobregelphase erforderlichen mittleren Heizleistung Rechnung trägt, eine Temperaturregelung um die Soll-Temperatur $T_S$ herum vorgenommen werden, indem bei dem Überschreiten der Feinregelschwellen jeweils eine Anpassung des Betriebsparametersatzes stattfindet und somit einer Tendenz der Temperaturveränderung entgegengewirkt wird.

Die Feinregelphase kann so lange fortgesetzt werden, so lange die Ist-Temperatur sich in der vorangehend beschriebenen Art und Weise im Bereich der Soll-Temperatur $T_S$ halten lässt. Dies wird dann der Fall sein, wenn keine spontanen Änderungen der Umgebungsbedingungen auftreten. Wird jedoch beispielsweise bei vergleichsweise niedriger Umgebungstemperatur die Tür eines Fahrzeugs geöffnet, so dass ein sehr schnelles Abfallen der Ist-Temperatur registriert wird, was eine spontane große Abweichung der Ist-Temperatur $T$ von der Soll-Temperatur $T_S$ mit sich bringt, so kann die Feinregelphase beendet werden und zunächst durch entsprechende Vorgabe einer der auch für die Grobregelphase möglichen Heizleistungsstufen versucht werden, die Ist-Temperatur zunächst möglichst schnell wieder in den Bereich der Soll-Temperatur zu bringen. Beispielsweise kann die Feinregelphase dann beendet werden, wenn die Ist-Temperatur von der Soll-Temperatur $T_S$ in einem Ausmaß abweicht, welche ein Überschreiten der für die Grobregelphase vorgesehenen Grobregelschwellen $SG_1$ bzw. $SG_2$ bedeutet. Es kann also dann auch wieder mit einer Grobregelphase, möglicherweise auch auf einem anderen Temperaturniveau, begonnen werden, an welche sich dann selbstverständlich auch wieder eine Feinregelphase anschließen kann. Auch ist es möglich, die Feinregelphase dann zu beenden, wenn durch die wiederholte Anpassung der Betriebsparameter entweder die maximal mögliche Heizleistung oder die minimal mögliche Heizleistung des Fahrzeugheizgeräts erreicht ist.

Ein weiteres Kriterium für das Beenden der Feinregelphase kann in der Variation der Soll-Temperatur $T_S$ liegen. Dabei kann beispielsweise überwacht werden, in welchem Ausmaß die Soll-Temperatur verändert wird. Ist dieses Ausmaß nur sehr klein, kann davon ausgegangen werden, dass auch mit dem momentan vorliegenden Betriebsparametern eine sinnvolle Weiterführung der Feinregelphase möglich ist. Ist die Variation zu groß, kann beispielsweise wieder in eine Grobregelphase übergegangen werden, um zunächst eine Nachführung der Ist-Temperatur in Richtung der neuen Soll-Temperatur zu erreichen.

Die vorangehend erläuterte erfindungsgemäße Vorgehensweise ist selbstverständlich unabhängig davon einsetzbar, wie viele Heizleistungsstufen für die Durchführung der Grobregelphase grundsätzlich zur Verfügung stehen. Im Allgemeinen werden bei modernen Fahrzeugheizgeräten hierfür vier verschiedene Heizleistungsstufen eingesetzt. Grundsätzlich ist es jedoch auch ausreichend, nur zwei derartige Heizleistungsstufen vorzusehen.

Vorangehend wurde mit Bezug auf die Fig. 5 und 6 die erfindungsgemäße Vorgehensweise in der Feinregelphase so erläutert, dass die Veränderung bzw. Anpassung des bzw. der mittleren Betriebsparameter $BP1_m$, $BP2_m$ immer dann, wenn eine Anpassung erforderlich ist, in einem beispielsweise beruhend auf einem bestimmten Prozentsatz des Ausgangswertes des jeweiligen mittleren Betriebsparameters entsprechenden Ausmaß vorgenommen wird, in Fig. 6 repräsentiert durch den Betrag $\Delta_{BP}$. Dieses Ausmaß der Veränderung kann selbstverständlich für die beiden Betriebsparameter unterschiedlich sein und kann auch davon abhängen, ob eine Anpassung nach oben oder eine Anpassung nach unten erforderlich ist. Weiterhin ist es möglich, nicht einen auf den Ausgangswert am Beginn der Feinregelphase unveränderlich bezogenen Veränderungsbetrag $\Delta_{BP}$ vorzusehen. Beispielsweise kann der Veränderungsbetrag jeweils als prozentualer Anteil des momentan jeweils vorhandenen mittleren Betriebsparameters bzw. bereits angepassten mittleren Betriebsparameters gewählt werden. Dies bedeutet, dass dann, wenn, wie dies in der Fig. 6 der Fall ist, eine erste Anpassung durch Erhöhung erfolgt, beispielsweise um 5% des Ausgangswertes, die zweite Veränderung, also die zum Zeitpunkt $t_8$ durchgeführte Veränderung, dann eine Veränderung um 5% des bereits erhöhten mittleren Betriebsparameters darstellt, so dass der nach dem Zeitpunkt $t_8$ vorhandene angepasste mittlere erste Betriebsparameter einen geringeren Wert aufweisen wird, als vor dem Zeitpunkt $t_7$.

Weiterhin ist es selbstverständlich möglich, bei der Anpassung der Feinregelschwellen dann, wenn diese mehrmals aufeinander folgend in der gleichen Richtung anzupassen sind, also beispielsweise mehrmals aufeinander folgend die obere Feinregelschwelle $SF_1$ zu erhöhen ist oder die untere Feinregelschwellwe $SF_2$ zu senken ist, hierzu nicht jeweils die gleiche Schrittgrö-βe gewählt wird. Beispielsweise kann mit zunehmender Anzahl an Veränderungen in der gleichen Richtung auch das Schrittausmaß verringert werden, oder, je nach Regelstrategie, auch erhöht werden.

Mit der erfindungsgemäßen Vorgehensweise wird es also möglich, eine relativ feinfühlige Heizleistungsregelung zu erzielen, und zwar in einem Regelbereich, welcher beruhend auf dem vorangehenden Betrieb der Grobregelphase bestimmt wird. Häufige starke Änderungen der Heizleistung, wie diese in der Grobregelphase allgemein auftreten, können somit in der Feinregelphase vermieden werden. Dies führt zu einem erhöhten Komfort auch durch Verringerung der wahrnehmbaren Änderungen in den Betriebszuständen der beiden Förderanordnungen. Auch kann durch die vorangehend beschriebene Feinregelphase dafür gesorgt werden, dass auch allmählich sich ändernde Umgebungsbedingungen ohne erneuten Übergang in die Grobregelphase berücksichtigt werden, nämlich durch entsprechend allmähliches Anpassen der mittleren Betriebsparameter.

**Patentansprüche**

1. Verfahren zum Betreiben eines Fahrzeugheizgerätes, wobei das Fahrzeugheizgerät einen Brennerbereich sowie eine Verbrennungsluftförderanordnung (14) zum Fördern von Verbrennungsluft zu dem Brennerbereich (12) und eine Brennstoffförderanordnung (20) zum Fördern von Brennstoff zu dem Brennerbereich (12) aufweist, ferner umfassend eine Ansteuervorrichtung (30), durch welche die Verbrennungsluftförderanordnung (14) und die Brennstoffförderanordnung (20) ansteuerbar sind, um das Fahrzeugheizgerät (10) in verschiedenen Heizleistungsstufen (HLS1, HLS2) zu betreiben, wobei in Zuordnung zu jeder Heizleistungsstufe (HLS1, HLS2) ein das Fördervermögen der Verbrennungsluftförderanordnung (14) charakterisierender erster Betriebsparameter (BP1) und ein das Fördervermögen der Brennstoffförderanordnung (20) charakterisierender zweiter Betriebsparameter (BP2) vorgesehen sind und die Ansteuervorrichtung (30) zum Betreiben des Fahrzeugheizgerätes (10) in einer bestimmten Heizleistungsstufe (HLS1, HLS2) die Verbrennungsluftförderanordnung (14) und die Brennstoffförderanordnung (20) mit dem in Zuordnung zu dieser bestimmten Heizleistungsstufe (HLS1, HLS2) vorgesehenen ersten Betriebsparameter (BP1) und zweiten Betriebsparameter (BP2) ansteuert, **dadurch gekennzeichnet, dass** das Verfahren die Maßnahmen umfasst:

   a) Durchführen einer Grobregelphase der Heizleistung zum Einstellen einer Ist-Temperatur im Bereich einer Soll-Temperatur ($T_s$), wobei die Grobregelphase das alternierende Umschalten zwischen einer ersten Heizleistungsstufe (HLS1) geringerer Heizleistung und einer zweiten Heizleistungsstufe (HLS2) höherer Heizleistung umfasst,
   b) während der Durchführung der Maßnahme a), Bestimmen eines mittleren ersten Betriebsparameters ($BP1_m$) und eines mittleren zweiten Betriebsparameters ($BP2_m$), beruhend auf einem Betriebszeitanteil der ersten Heizleistungsstufe (HLS1) und einem Betriebszeitanteil der zweiten Heizleistungsstufe (HLS2),
   c) nach Beendigung der Grobregelphase, Starten einer Feinregelphase, wobei wenigstens am Beginn der Feinregelphase die Verbrennungsluftförderanordnung (14) beruhend auf dem mittleren ersten Betriebsparameter ($BP1_m$) angesteuert wird und die Brennstoffförderanordnung (20) beruhend auf dem mittleren zweiten Betriebsparameter ($BP2_m$) angesteuert wird.

2. Verfahren nach Anspruch 1,
   **dadurch gekennzeichnet, dass** der Beginn der Grobregelphase dann erkannt wird, wenn wenigstens ein Wechsel von einer Heizleistungsstufe von erster Heizleistungsstufe (HLS1) und zweiter Heizleistungsstufe (HLS2) in die jeweils andere Heizleistungsstufe und darauf folgend ein Wechsel von der anderen Heizleistungsstufe zurück in die eine Heizleistungsstufe aufgetreten ist.

3. Verfahren nach Anspruch 1 oder 2,
   **dadurch gekennzeichnet, dass** der Betriebszeitanteil der ersten Heizleistungsstufe (HLS1) beruhend auf der Zeit, während welcher in der Grobregelphase die Ansteueranordnung (30) die Verbrennungsluftförderanordnung (14) und die Brennstoffförderanordnung (20) zum Bereitstellen der ersten Heizleistungsstufe (HLS1) ansteuert, bestimmt wird, und dass der Betriebszeitanteil der zweiten Heizleistungsstufe (HLS2) beruhend auf der Zeit, während welcher in der Grobregelphase die Ansteueranordnung (30) die Verbrennungsluftförderanordnung (14) und die Brennstoffförderanordnung (20) zum Bereitstellen der zweiten Heizleistungsstufe (HLS2) ansteuert, bestimmt wird.

**4.** Verfahren nach einem der Ansprüche 1 bis 3,
**dadurch gekennzeichnet, dass** der mittlere erste Betriebsparameter ($BP1_m$) beruhend auf der mit dem jeweiligen Betriebszeitanteil der ersten Heizleistungsstufe (HLS1) und der zweiten Heizleistungsstufe (HLS2) in der Grobregelphase gewichteten Summe des ersten Betriebsparameters ($BP1_{HLS1}$) für die erste Heizleistungsstufe (HLS1) und des ersten Betriebsparameters ($BPI_{HLS2}$) für die zweite Heizleistungsstufe (HLS2) bestimmt wird.

**5.** Verfahren nach einem der Ansprüche 1 bis 4,
**dadurch gekennzeichnet, dass** der mittlere erste Betriebsparameter ($BP1_m$) berechnet wird gemäß:

$$BP1_m = BP1_{HLS1} \times [Z_{HLS1}/(Z_{HLS1} + Z_{HLS2})] + BP1_{HLS2} \times [Z_{HLS2}/(Z_{HLS1} + Z_{HLS2})],$$

wobei:

$BP1_{HLS1}$, der erste Betriebsparameter für die erste Heizleistungsstufe (HLS1) ist,
$BP1_{HLS2}$ der erste Betriebsparameter für die zweite Heizleistungsstufe (HLS2) ist,
$Z_{HLS1}$ die Betriebszeit der ersten Heizleistungsstufe (HLS1) in der Grobregelphase ist,
$Z_{HLS2}$ die, Betriebszeit der zweiten Heizleistungsstufe (HLS2) in der Grobregelphase ist.

**6.** Verfahren nach einem der Ansprüche 1 bis 5,
**dadurch gekennzeichnet, dass** der mittlere zweite Betriebsparameter ($BP2_m$) beruhend auf der mit dem jeweiligen Betriebszeitanteil der ersten Heizleistungsstufe (HLS1) und der zweiten Heizleistungsstufe (HLS2) in der Grobregelphase gewichteten Summe des zweiten Betriebsparameters ($BP2_{HLS1}$) für die erste Heizleistungsstufe (HLS1) und des zweiten Betriebsparameters ($BP2_{HLS2}$) für die zweite Heizleistungsstufe bestimmt wird.

**7.** Verfahren nach einem der Ansprüche 1 bis 6,
**dadurch gekennzeichnet, dass** der mittlere zweite Betriebsparameter ($BP2_m$) berechnet wird gemäß:

$$BP2_m = BP2_{HLS1} \times [Z_{HLS1}/(Z_{HLS1} + Z_{HLS2})] + BP2_{HLS2} \times [Z_{HLS2}/(Z_{HLS1} + Z_{HLS2})],$$

wobei:

$BP2_{HLS1}$ der zweite Betriebsparameter für die erste Heizleistungsstufe (HLS1) ist,
$BP2_{HLS2}$ der zweite Betriebsparameter für die zweite Heizleistungsstufe (HLS2) ist,
$Z_{HLS1}$ die Betriebszeit der ersten Heizleistungsstufe (HLS1) in der Grobregelphase ist,
$Z_{HLS2}$ die Betriebszeit der zweiten Heizleistungsstufe (HLS2) in der Grobregelphase ist.

**8.** Verfahren nach einem der Ansprüche 1 bis 7,
**dadurch gekennzeichnet, dass** für die Grobregelphase in Zuordnung zu der Soll-Temperatur ($T_s$) eine über der Soll-Temperatur ($T_s$) liegende erste Grobregelschwelle ($SG_1$) und eine unter der Soll-Temperatur ($T_s$) liegende zweite Grobregelschwelle ($SG_2$) bestimmt werden, wobei dann, wenn die Ist-Temperatur die erste Grobregelschwelle ($SG_1$) überschreitet, die Ansteuervorrichtung (30) die Verbrennungsluftförderanordnung (14) und die Brennstoffförderanordnung (30) zum Bereitstellen der ersten Heizleistungsstufe (HLS1) ansteuert, und dann, wenn die Ist-Temperatur die zweite Grobregelschwelle ($SG_2$) unterschreitet, die Ansteuervorrichtung (30) die Verbrennungsluftförderanordnung (14) und die Brennstoffförderanordnung (20) zum Bereitstellen der zweiten Heizleistungsstufe (HLS2) ansteuert.

**9.** Verfahren nach Anspruch 8,
**dadurch gekennzeichnet, dass** die erste Grobregelschwelle ($SG_1$) und die zweite Grobregelschwelle ($SG_2$) für die Grobregelphase unveränderbar vorgegeben werden.

**10.** Verfahren nach einem der Ansprüche 1 bis 9,
**dadurch gekennzeichnet, dass** für die Feinregelphase in Zuordnung zu der Soll-Temperatur ($T_s$) eine über der

Soll-Temperatur ($T_s$) liegende erste Feinregelschwelle ($SF_1$) und eine unter der Soll-Temperatur ($T_s$) liegende zweite Feinregelschwelle ($SF_2$) bestimmt werden.

11. Verfahren nach Anspruch 8 und Anspruch 10,
    **dadurch gekennzeichnet, dass** wenigstens am Beginn der Feinregelphase der Abstand der ersten Feinregelschwelle ($SF_1$) von der Soll-Temperatur ($T_s$) kleiner ist als der Abstand der ersten Grobregelschwelle ($SG_1$) von der Soll-Temperatur ($T_s$) oder/und dass wenigstens am Beginn der Feinregelphase der Abstand der zweiten Feinregelschwelle ($SF_2$) von der Soll-Temperatur ($T_s$) kleiner ist als der Abstand der zweiten Grobregelschwelle ($SG_2$) von der Soll-Temperatur ($T_s$).

12. Verfahren nach Anspruch 10 oder 11,
    **dadurch gekennzeichnet, dass** dann, wenn in der Feinregelphase die Ist-Temperatur die erste Feinregelschwelle ($SF_1$) überschreitet, der mittlere erste Betriebsparameter ($BP1_m$) oder/und der mittlere zweite Betriebsparameter ($BP2_m$) zur Bereitstellung eines angepassten Betriebsparametersatzes vermindert wird und dass die Ansteuervorrichtung (30) die Verbrennungsluftförderanordnung (14) und die Brennstoffförderanordnung (20) auf der Grundlage des angepassten Betriebsparametersatzes ansteuert.

13. Verfahren nach Anspruch 12,
    **dadurch gekennzeichnet, dass** bei Überschreiten der ersten Feinregelschwelle ($SF_1$) und Bereitstellung eines angepassten Betriebsparametersatzes die erste Feinregelschwelle ($SF_1$) erhöht wird, um eine angepasste erste Feinregelschwelle ($SF_1$) bereitzustellen.

14. Verfahren nach einem der Ansprüche 10 bis 13,
    **dadurch gekennzeichnet, dass** dann, wenn in der Feinregelphase die Ist-Temperatur die zweite Feinregelschwelle ($SF_2$) unterschreitet, der mittlere erste Betriebsparameter ($BP1_m$) oder/und der mittlere zweite Betriebsparameter ($BP2_m$) zur Bereitstellung eines angepassten Betriebsparametersatzes erhöht wird und dass die Ansteuervorrichtung (30) die Verbrennungsluftförderanordnung (14) und die Heizluftförderanordnung (20) auf der Grundlage des angepassten Betriebsparametersatzes ansteuert.

15. Verfahren nach Anspruch 14,
    **dadurch gekennzeichnet, dass** bei Unterschreiten der zweiten Freinregelschwelle ($SF_2$) und Bereitstellung eines angepassten Betriebsparametersatzes die zweite Feinregelschwelle ($SF_2$) vermindert wird, um eine angepasste zweite Feinregelschwelle ($SF_2$) bereitzustellen.

16. Verfahren nach Anspruch 13 oder 15,
    **dadurch gekennzeichnet, dass** dann, wenn die erste Feinregelschwelle ($SF_1$) zum Bereitstellen einer angepassten ersten Feinregelschwelle ($SF_1$) erhöht worden ist und die Ist-Temperatur die zweite Feinregelschwelle ($SF_2$) unterschreitet, die erste Feinregeischwelle ($SF_1$) wieder vermindert wird, vorzugsweise auf den Anfangswert der ersten Feinregelschwelle ($SF_1$) am Beginn der Feinregelphase, oder/und, dass dann, wenn die zweite Feinregelschwelle ($SF_2$) zum Bereitstellen einer angepassten zweiten Feinregelschwelle ($SF_2$) verringert worden ist und die Ist-Temperatur die erste Feinregelschwelle ($SF_1$) überschreitet, die zweite Feinregelschwelle ($SF_2$) wieder erhöht wird, vorzugsweise auf den Anfangswert der zweiten Feinregelschwelle ($SF_2$) am Beginn der Feinregelphase.

17. Verfahren nach einem der Ansprüche 1 bis 16,
    **dadurch gekennzeichnet, dass** die Ist-Temperatur die Temperatur in einem zu erwärmenden Innenraum ist.

18. Verfahren nach einem der Ansprüche 1 bis 17,
    **dadurch gekennzeichnet, dass** der erste Betriebsparameter (BP1) eine Drehzahl eines Förderrades (18) der Verbrennungsluftförderanordnung (14) wiedergibt.

19. Verfahren nach einem der Ansprüche 1 bis 18,
    **dadurch gekennzeichnet, dass** der zweite Betriebsparameter (BP2) eine Pumpfrequenz eines Pumporgans der Brennstoffförderanordnung (20) wiedergibt.

**Claims**

1. A procedure for operating a vehicle heating device, the vehicle heating device comprising a burner section as well as a combustion air conveying arrangement (14) for conveying combustion air towards the burner section (12) and a fuel conveying arrangement (20) for conveying fuel towards the burner section (12), further comprising an actuator device (30) through which the combustion air conveying arrangement (14) and the fuel conveying arrangement (20) may be activated to operate the heating device (10) in different heating power stages (HLS1, HLS2), wherein a first operating parameter (BP1) which characterizes the conveying capacity of the combustion air conveying arrangement (14) and a second operating parameter (BP2) which characterizes the conveying capacity of the fuel conveying arrangement (20) are provided in association to each heating power stage (HLS1, HLS2), and wherein the actuator device (30) for operating the vehicle heating device (10) in a certain heating power stage (HLS1, HLS2) is activating the combustion air conveying arrangement (14) and the fuel conveying arrangement (20) with the first operating parameter (BP1) and the second operating parameter (BP2) provided respectively in association to this particular heating power stage (HLS1, HLS2), **characterized in** the procedure comprising the following measures:

a) performing a rough adjustment phase of the heating power for setting an actual temperature in the range of a target temperature (Ts), the rough adjustment phase comprising the alternating switching between a first heating power stage (HLS1) with a lower heating power and a second heating power stage (HLS2) with a higher heating power,

b) while executing measure a), determining a mean first operating parameter (BP1$_m$) and a mean second operating parameter (BP2$_m$), on the basis of an operating time ratio of the first heating power stage (HLS1) and an operating time ratio of the second heating power stage (HLS2),

c) after finishing the rough adjustment phase, starting a fine adjustment phase, wherein at least at the beginning of the fine adjustment phase the combustion air conveying arrangement (14) is activated on the basis of the mean first operating parameter (BP1$_m$) and the fuel conveying arrangement (20) is activated on the basis of the mean second operating parameter (BP2$_m$).

2. A procedure according to claim 1,
   **characterized in** the beginning of the rough adjustment phase being detected when at least a switching from one heating power stage out of first heating power stage (HLS1) and second heating power stage (HLS2) to the other heating power stage and following thereon a switching from the other heating power stage back to the one heating power stage has occurred.

3. A procedure according to claim 1 or 2,
   **characterized in that** the operating time ratio of the first heating power stage (HLS1) is determined on the basis of the time when in the rough adjustment phase the actuator device (30) is activating the combustion air conveying arrangement (14) and the fuel conveying arrangement (20) for providing the first heating power stage (HLS1), and **in that** the second heating power stage (HLS2) is determined on the basis of the time when in the rough adjustment phase the actuator device (30) is activating the combustion air conveying arrangement (14) and the fuel conveying arrangement (20) for providing the second heating power stage (HLS2).

4. A procedure according to one of claims 1 to 3,
   **characterized in that** the mean first operating parameter (BP1$_m$) is determined on the basis of the sum of the first operating parameter (BP1$_{HLS1}$) for the first heating power stage (HLS1) and the first operating parameter (BP1$_{HLS2}$) for the second heating power stage (HLS2) weighted with the corresponding operating time ratio of the first heating power stage (HLS1) and the second heating power stage (HLS2) in the rough adjustment phase.

5. A procedure according to one of claims 1 to 4,
   **characterized in that** the mean first operating parameter (BP1$_m$) is calculated as follows:

$$BP1_m = BP1_{HLS1} \times [Z_{HLS1}/(Z_{HLS1} + Z_{HLS2})] + BP1_{HLS2} \times [Z_{HLS2}/(Z_{HLS1} + Z_{HLS2})],$$

with:

BP1$_{HLS1}$ being the first operating parameter for the first heating power stage (HLS1),
BP1$_{HLS2}$ being the first operating parameter for the second heating power stage (HLS2),
Z$_{HLS1}$ being the operating time of the first heating power stage (HLS1) in the rough adjustment phase,
Z$_{HLS2}$ being the operating time of the second heating power stage (HLS2) in the rough adjustment phase.

**6.** A procedure according to one of claims 1 to 5,
**characterized in that** the mean second operating parameter ($BP2_m$) is determined on the basis of the sum of the second operating parameter ($BP2_{HLS1}$) for the first heating power stage (HLS1) and the second operating parameter ($BP2_{HLS2}$) for the second heating power stage (HLS2) weighted with the corresponding operating time ratio of the first heating power stage (HLS1) and the second heating power stage (HLS2) in the rough adjustment phase.

**7.** A procedure according to one of claims 1 to 6,
**characterized in that** the mean second operating parameter ($BP2_m$) is calculated as follows:

$$BP2_m = BP2_{HLS1} \times [Z_{HLS1}/(Z_{HLS1} + Z_{HLS2})] + BP2_{HLS2} \times [Z_{HLS2}/(Z_{HLS1} + Z_{HLS2})],$$

with:

$BP2_{HLS1}$ being the second operating parameter for the first heating power stage (HLS1),
$BP2_{HLS2}$ being the second operating parameter for the second heating power stage (HLS2),
$Z_{HLS1}$ being the operating time of the first heating power stage (HLS1) in the rough adjustment phase,
$Z_{HLS2}$ being the operating time of the second heating power stage (HLS2) in the rough adjustment phase.

**8.** A procedure according to one of claims 1 to 7,
**characterized in that** for the rough adjustment phase in association to the set temperature ($T_s$) a first rough adjustment threshold ($SG_1$) lying above the set temperature ($T_s$) and a second rough adjustment threshold ($SG_2$) lying below the set temperature ($T_s$) are determined, wherein when the actual temperature exceeds the first rough adjustment threshold ($SG_1$) the actuator device (30) activates the combustion air conveying arrangement (14) and the fuel conveying arrangement (20) for providing the first heating power stage (HLS1), and wherein when the actual temperature falls below the second rough adjustment threshold ($SG_2$) the actuator device (30) activates the combustion air conveying arrangement (14) and the fuel conveying arrangement (20) for providing the second heating power stage (HLS2).

**9.** A procedure according to claim 8,
**characterized in** the first rough adjustment threshold ($SG_1$) and the second rough adjustment threshold ($SG_2$) being set unchangeably for the rough adjustment phase.

**10.** A procedure according to one of claims 1 to 9,
**characterized in that** for the fine adjustment phase in relation to the set temperature ($T_s$) a first fine adjustment threshold ($SF_1$) lying above the set temperature ($T_s$) and a second fine adjustment threshold ($SF_2$) lying below the set temperature ($T_s$) are determined.

**11.** A procedure according to claim 8 and claim 10,
**characterized in that** at least in the beginning of the fine adjustment phase the difference between the first fine adjustment threshold ($SF_1$) and the set temperature ($T_s$) is smaller than the difference between the first rough adjustment threshold ($SG_1$) and the set temperature ($T_s$) or/and **in that** at least in the beginning of the fine adjustment phase the difference between the second fine adjustment threshold ($SF_2$) and the set temperature ($T_s$) is smaller than the difference between the second rough adjustment threshold ($SG_2$) and the set temperature ($T_s$).

**12.** A procedure according to claim 10 or 11,
**characterized in that** when in the fine adjustment phase the set temperature exceeds the first fine adjustment threshold ($SF_1$), the mean first operating parameter ($BP1_m$) or/and the mean second operating parameter ($BP2_m$) are reduced for providing an adjusted set of operating parameters and **in that** the actuator device (30) activates the combustion air conveying arrangement (14) and the fuel conveying arrangement (20) on the basis of the adjusted set of operating parameters.

**13.** A procedure according to claim 12,
**characterized in that** when the first fine adjustment threshold ($SF_1$) is exceeded and an adjusted set of operating parameters is provided the first fine adjustment threshold ($SF_1$) is increased for providing an adjusted first fine adjustment threshold ($SF_1$).

**14.** A procedure according to one of claims 10 to 13,
**characterized in that** when in the fine adjustment phase the set temperature exceeds the second fine adjustment threshold ($SF_2$), the mean first operating parameter ($BP1_m$) or/and the mean second operating parameter ($BP2_m$) are increased for providing an adjusted set of operating parameters and **in that** the actuator device (30) activates the combustion air conveying arrangement (14) and the fuel conveying arrangement (20) on the basis of the adjusted set of operating parameters.

**15.** A procedure according to claim 14,
**characterized in that** when falling below the second fine adjustment threshold ($SF_2$) and providing an adjusted set of operating parameters the second fine adjustment threshold ($SF_2$) is reduced for providing an adjusted second fine adjustment threshold ($SF_2$).

**16.** A procedure according to claim 13 or 15,
**characterized in that**, when the first fine adjustment threshold ($SF_1$) has been increased for providing and adjusted first fine adjustment threshold ($SF_1$) and when the actual temperature falls below the second fine adjustment threshold ($SF_2$), the first fine adjustment threshold ($SF_1$) is again reduced, preferably to the initial value of the first fine adjustment threshold ($SF_1$) in the beginning of the fine adjustment phase, or/and **in that**, when the second fine adjustment threshold ($SF_2$) has been reduced for providing an adjusted second fine adjustment threshold ($SF_2$) and the actual temperature exceeds the first fine adjustment threshold ($SF_1$), the second fine adjustment threshold ($SF_2$) is again increased, preferably to the initial value of the second fine adjustment threshold ($SF_2$) in the beginning of the fine adjustment phase.

**17.** A procedure according to one of claims 1 to 16,
**characterized in** the actual temperature being the temperature inside an interior to be heated.

**18.** A procedure according to one of claims 1 to 17,
**characterized in** the first operating parameter (BP1) representing a rotational speed of a conveying wheel (18) of the combustion air conveying arrangement (14).

**19.** A procedure according to one of claims 1 to 18,
**characterized in** the second operating parameter (BP2) representing a pump frequency of a pump means of the fuel conveying arrangement (20).

**Revendications**

**1.** Une méthode pour opérer un dispositif de chauffage d'un véhicule, le dispositif de chauffage d'un véhicule comprenant une zone de brûleur ainsi qu'un arrangement de transport d'air de combustion (14) pour transporter de l'air de combustion à la zone de brûleur (12) et un arrangement de transport de combustible (20) pour transporter du combustible à la zone de brûleur (12), comprenant de plus un dispositif d'activation (30) grâce auquel l'arrangement de transport d'air de combustion (14) et l'arrangement de transport de combustible (20) peuvent être activés pour opérer le dispositif de chauffage d'un véhicule (10) sur des niveaux différents de puissance de chauffage (HLS1, HLS2), un premier paramètre d'opération (BP1) caractérisant la capacité de transport de l'arrangement de transport d'air de combustion (14) et un deuxième paramètre d'opération (BP2) caractérisant la capacité de transport de l'arrangement de transport de combustible (20) étant prévus associés à chaque niveau de puissance de chauffage (HLS1, HLS2) et le dispositif d'activation (30) pour opérer le dispositif de chauffage d'un véhicule (10) activant sur un certain niveau de puissance de chauffage (HLS1, HLS2) l'arrangement de transport d'air de combustion (14) et l'arrangement de transport de combustible (20) avec le premier paramètre d'opération (BP1) et le deuxième paramètre d'opération (BP2) prévus respectivement associés à ce niveau de puissance de chauffage (HLS1, HLS2),
**caractérisée par** la méthode comprenant les mesures suivantes :

a) effectuer une phase de réglage approximatif de la puissance de chauffage pour choisir une température réelle dans la gamme d'une température de consigne ($T_s$), la phase de réglage approximatif comprenant le passage alternant entre un premier niveau de puissance de chauffage (HLS1) avec une puissance de chauffage inférieure et un deuxième niveau de puissance de chauffage (HLS2) avec une puissance de chauffage supérieure,
b) pendant la réalisation de la mesure a), déterminer un premier paramètre d'opération moyen ($BP1_m$) et und deuxième paramètre d'opération moyen ($BP2_m$) sur la base d'une part de temps d'opération du premier niveau de puissance de chauffage (HLS1) et une part de temps d'opération du deuxième niveau de puissance de chauffage (HLS2),

c) après la fin de la phase de réglage approximatif, débuter une phase de réglage précis, l'arrangement de transport d'air de combustion (14) étant activé au moins au début de la phase de réglage précis sur la base du premier paramètre d'opération moyen ($BP1_m$) et l'arrangement de transport de combustible (20) étant activé sur la base du deuxième paramètre d'opération moyen ($BP2_m$).

**2.** La méthode selon la revendication 1,
**caractérisée en ce que** le début de la phase de réglage approximatif est détecté quand au moins un passage d'un niveau de puissance de chauffage, choisi du premier niveau de puissance de chauffage (HLS1) et du deuxième niveau de puissance de chauffage (HLS2), à l'autre niveau de puissance de chauffage et puis un retour de l'autre niveau de puissance de chauffage a un niveau précédent de puissance de chauffage a eu lieu.

**3.** La méthode selon la revendication 1 ou 2,
**caractérisée en ce que** sont déterminées la part de temps d'opération du premier niveau de puissance de chauffage (HLS1), basée sur la période pendant laquelle durant la phase de réglage approximatif le dispositif d'activation (30) active l'arrangement de transport d'air de combustion (14) et l'arrangement de transport de combustible (20) pour prévoir le premier niveau de puissance de chauffage (HLS1), et la part de temps d'opération du deuxième niveau de puissance de chauffage (HLS2), basée sur la période pendant laquelle durant la phase de réglage approximatif le dispositif d'activation (30) active l'arrangement de transport d'air de combustion (14) et l'arrangement de transport de combustible (20) pour prévoir le deuxième niveau de puissance de chauffage (HLS2).

**4.** La méthode selon une des revendications 1 à 3,
**caractérisée en ce que** le premier paramètre d'opération moyen ($BP1_m$) est déterminé, basé sur la somme du premier paramètre d'opération ($BP1_{HLS1}$) pour le premier niveau de puissance de chauffage (HLS1) et du premier paramètre d'opération ($BP1_{HLS2}$) pour le deuxième niveau de puissance de chauffage (HLS2), pondéré par la part respective de temps d'opération du premier niveau de puissance de chauffage (HLS1) et du deuxième niveau de puissance de chauffage (HLS2) pendant la phase de réglage approximatif.

**5.** La méthode selon une des revendications 1 à 4,
**caractérisée en ce que** le premier paramètre d'opération moyen ($BP1_m$) est calculé comme suit :

$$BP1_m = BP1_{HLS1} \times [Z_{HLS1}/(Z_{HLS1} + Z_{HLS2})] + BP1_{HLS2} \times [Z_{HLS2}/(Z_{HLS1} + Z_{HLS2})]$$

avec :

$BP1_{HLS1}$ étant le premier paramètre d'opération pour le premier niveau de puissance de chauffage (HLS1) ;
$BP1_{HLS2}$ étant le premier paramètre d'opération pour le deuxième niveau de puissance de chauffage (HLS2) ;
$Z_{HLS1}$ étant le temps d'opération du premier niveau de puissance de chauffage (HLS1) pendant la phase de réglage approximatif,
$Z_{HLS2}$ étant le temps d'opération du deuxième niveau de puissance de chauffage (HLS2) pendant la phase de réglage approximatif.

**6.** La méthode selon une des revendications 1 à 5,
**caractérisée en ce que** le deuxième paramètre d'opération moyen ($BP2_m$) est déterminé, basé sur la somme du deuxième paramètre d'opération ($BP2_{HLS1}$) pour le premier niveau de puissance de chauffage (HLS1) et du deuxième paramètre d'opération ($BP2_{HLS2}$) pour le deuxième niveau de puissance de chauffage (HLS2), pondéré par la part respective de temps d'opération du premier niveau de puissance de chauffage (HLS1) et du deuxième niveau de puissance de chauffage (HLS2) pendant la phase de réglage approximatif.

**7.** La méthode selon une des revendications 1 à 6,
**caractérisée en ce que** le deuxième paramètre d'opération moyen ($BP2_m$) est calculé comme suit :

$$BP2_m = BP2_{HLS1} \times [Z_{HLS1}/(Z_{HLS1} + Z_{HLS2})] + BP2_{HLS2} \times [Z_{HLS2}/(Z_{HLS1} + Z_{HLS2})]$$

avec:

$BP2_{HLS1}$ étant le deuxième paramètre d'opération pour le premier niveau de puissance de chauffage (HLS1) ;
$BP2_{HLS2}$ étant le deuxième paramètre d'opération pour le deuxième niveau de puissance de chauffage (HLS2) ;
$Z_{HLS1}$ étant le temps d'opération du premier niveau de puissance de chauffage (HLS1) pendant la phase de réglage approximatif,
$Z_{HLS2}$ étant le temps d'opération du deuxième niveau de puissance de chauffage (HLS2) pendant la phase de réglage approximatif.

8.  La méthode selon une des revendications 1 à 7,
**caractérisée en ce que** pour la phase de réglage approximatif sont déterminés en association à ma température de consigne ($T_s$) un premier seuil de réglage approximatif ($SG_1$), étant supérieur à la température de consigne ($T_s$), et un deuxième seuil de réglage approximatif ($SG_2$), étant inférieur à la température de consigne ($T_s$), et **en ce que** quand la température réelle dépasse le premier seuil de réglage approximatif ($SG_1$) le dispositif d'activation (30) active l'arrangement de transport d'air de combustion (14) et l'arrangement de transport de combustible (20) pour prévoir le premier niveau de puissance de chauffage (HLS1), et **en ce que** quand la température réelle reste inférieure au deuxième seuil de réglage approximatif ($SG_2$) le dispositif d'activation (30) active l'arrangement de transport d'air de combustion (14) et l'arrangement de transport de combustible (20) pour prévoir le deuxième niveau de puissance de chauffage (HLS2).

9.  La méthode selon la revendication 8,
**caractérisée par** le premier seuil de réglage approximatif ($SG_1$) et le deuxième seuil de réglage approximatif ($SG_2$) sont prédéterminés d'une manière invariable pour la phase de réglage approximatif.

10. La méthode selon une des revendications 1 à 9,
**caractérisée en ce que** pour la phase de réglage précis sont déterminés en association à la température de consigne ($T_s$) un premier seuil de réglage précis ($SF_1$) étant supérieur à la température de consigne ($T_s$) et un deuxième seuil de réglage précis ($SF_2$) étant inférieur à la température de consigne ($T_s$).

11. La méthode selon la revendication 8 et la revendication 10,
**caractérisée en ce que** au moins au début de la phase de réglage précis la différence entre le premier seuil de réglage précis ($SF_1$) et la température de consigne ($T_s$) est inférieure à la différence entre le premier seuil de réglage approximatif ($SG_1$) et la température de consigne ($T_s$) ou/et **en ce que**, au moins au début de la phase de réglage précis, la différence entre le deuxième seuil de réglage précis ($SF_2$) et la température de consigne ($T_s$) est inférieure à la différence entre le deuxième seuil de réglage approximatif ($SG_2$) et la température de consigne ($T_s$).

12. La méthode selon la revendication 10 ou 11,
**caractérisée en ce que** quand, pendant la phase de réglage précis la température de consigne est supérieure au premier seuil de réglage précis ($SF_1$), le premier paramètre d'opération moyen ($BP1_m$) ou/et le deuxième paramètre d'opération moyen ($BP2_m$) sont réduits pour prévoir un set de paramètres d'opération ajustés, et le dispositif d'activation (30) active l'arrangement de transport d'air de combustion (14) et l'arrangement de transport de combustible (20) sur la base du set de paramètres d'opération ajustés.

13. La méthode selon la revendication 12,
**caractérisée en ce que** quand le premier seuil de réglage précis ($SF_1$) est dépassé et un set de paramètres d'opération ajustés prévu le premier seuil de réglage précis ($SF_1$) est augmenté pour prévoir un premier seuil de réglage précis ($SF_1$) ajusté.

14. La méthode selon une des revendications 10 à 13,
**caractérisée en ce que** quand pendant la phase de réglage précis, la température réelle est inférieure au deuxième seuil de réglage précis ($SF_2$), le premier paramètre d'opération moyen ($BP1_m$) ou/et le deuxième paramètre d'opération moyen ($BP2_m$) sont augmentés pour prévoir un set de paramètres d'opération ajustés et le dispositif d'activation (30) active l'arrangement de transport d'air de combustion (14) et l'arrangement de transport de combustible (20) sur la base du set de paramètres d'opération ajustés.

15. La méthode selon la revendication 14,
**caractérisée en ce que** quand le deuxième seuil de réglage précis (SF$_2$) n'est pas atteint et un set de paramètres d'opération ajustés prévu le deuxième seuil de réglage précis (SF$_2$) est réduit pour prévoir un deuxième seuil de réglage précis (SF$_2$) ajusté.

16. La méthode selon la revendication 13 ou 15,
**caractérisée en ce que** quand le premier seuil de réglage précis (SF$_1$) a été augmenté pour prévoir un premier seuil de réglage précis (SF$_1$) ajusté et quand la température réelle est inférieure au deuxième seuil de réglage précis (SF$_2$), le premier seuil de réglage précis (SF$_1$) est de nouveau réduit, de préférence à la valeur initiale du premier seuil de réglage précis (SF$_1$) au début de la phase de réglage précis, ou/et quand le deuxième seuil de réglage précis (SF$_2$) a été réduit pour prévoir un deuxième seuil de réglage précis (SF$_2$) ajusté et quand la température réelle dépasse le premier seuil de réglage précis (SF$_1$), le deuxième seuil de réglage précis (SF$_2$) est de nouveau augmenté, de préférence à la valeur initiale du deuxième seuil de réglage précis (SF$_2$) au début de la phase de réglage précis.

17. La méthode selon une des revendications 1 à 16,
**caractérisée en ce que** la température réelle est la température dans un intérieur à chauffer.

18. La méthode selon une des revendications 1 à 17,
**caractérisée en ce que** le premier paramètre d'opération (BP1) représente la vitesse de rotation d'une roue de transport (18) de l'arrangement de transport d'air de combustion (14).

19. La méthode selon une des revendications 1 à 18,
**caractérisée en ce que** le deuxième paramètre d'opération (BP2) représente la fréquence de pompage d'un organe de pompage de l'arrangement de transport de combustible (20).

Fig. 1

Fig. 2

Fig. 3

Fig. 4

Fig. 5

Fig. 6

**EP 1 958 806 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4323586 A1